(19) Europäisches Patentamt / European Patent Office / Office européen des brevets

(11) **EP 2 799 851 B1**

(12) **EUROPÄISCHE PATENTSCHRIFT**

(45) Veröffentlichungstag und Bekanntmachung des Hinweises auf die Patenterteilung:
**27.06.2018   Patentblatt 2018/26**

(51) Int Cl.:
**G01N 27/02** *(2006.01)*   **F01N 3/20** *(2006.01)*
**B01D 53/00** *(2006.01)*

(21) Anmeldenummer: **13166475.7**

(22) Anmeldetag: **03.05.2013**

(54) **Messwertaufnehmer, Messvorrichtung und Verfahren zur elektrodenlosen Leitfähigkeitsmessung eines Mediums mittels Bestimmung eines Resonanzparameters eines Serienschwingkreises**

Measurement value recorder, measurement apparatus and method for electrodelessly measuring conductivity of a medium by determining a resonance parameter of a series resonating circuit

Capteur de valeur de mesure, dispositif de mesure et procédé de mesure de conductivité d'un médium sans électrodes par la  détermination d'un paramètre résonant d'un circuit résonant série

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.11.2014   Patentblatt 2014/45**

(73) Patentinhaber: **Seuffer GmbH & Co. KG**
**75365 Calw-Hirsau (DE)**

(72) Erfinder:
• **Troppert, Horst**
  **75365 Calw (DE)**

• **Burkhardt, Yannick**
  **75365 Calw (DE)**

(74) Vertreter: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(56) Entgegenhaltungen:
CH-A- 419 670        DE-A1- 2 822 943
DE-A1- 3 030 069     DE-A1- 19 823 836
DE-U1- 20 317 771    FR-A- 1 596 799

**Beschreibung**

Die vorliegende Erfindung bezieht sich auf einen Messwertaufnehmer und ein Verfahren zur elektrodenlosen Leitfähigkeitsmessung. Die Erfindung kann beispielsweise zur Konzentrationsmessung oder Füllstandsmessung in einem Tank mit wässriger Harnstofflösung zur Abgasreinigung in einem Kraftfahrzeug verwendet werden.

Die Messung der elektrolytischen Leitfähigkeit von wässrigen Lösungen dient z.B. in der chemischen Messtechnik dazu, Aufschluss über die Zusammensetzung von Flüssigkeiten zu erhalten. Zur elektrodenlosen Messung werden beispielsweise induktive Messwertaufnehmer verwendet. Solche Messwertaufnehmer können beispielsweise zur Einheitskontrolle von Wasser oder zur Konzentrationsbestimmung von Säuren und anderen Laugen verwendet werden. Selbstverständlich sind auch andere Anwendungen für eine elektrolytische Leitfähigkeitsmessung auch in anderen Medien, wie beispielsweise gasförmigen, schüttfähigen oder auch festen Medien denkbar.

Die Messungen solcher Messwertaufnehmer basieren auf dem Prinzip, dass zwischen der gemessenen spezifischen Leitfähigkeit und der Konzentration ein vorbestimmter Zusammenhang (beispielsweise ein linearer Zusammenhang) besteht.

Bei elektrodenbasierten Leitfähigkeitsmessungen ergeben sich Probleme durch Verschmutzung, Polarisation und chemische Reaktion an den Elektroden. Bisherige elektrodenlose Messsysteme können aufgrund kleiner Ausgangsspannungen geringe Leitfähigkeiten nicht messen oder benötigen eine zu aufwendige Auswerteelektronik.

In der DE 196 11 174 C1 wird ein Messwertaufnehmer zur elektrodenlosen Leitfähigkeitsmessung von wässrigen Lösungen nach dem 3-Transformator-Prinzip vorgeschlagen. Hierbei werden drei Transformatoren verwendet, wobei ein erster Transformator in Verbindung mit einer Messflüssigkeit steht und eine Generatorwechselspannung in ein Magnetfeld umwandelt, wobei die Messflüssigkeit von dem durch den ersten Transformator mit der Generatorwechselspannung erzeugten Magnetfeld durchdrungen wird. Ferner sind ein zweiter und ein dritter Transformator vorgesehen, die beide über das in der Flüssigkeit vorhandene Magnetfeld mit dem ersten Transformator verkoppelt sind. Jede der beiden weiteren Transformatoren mit der Funktion als Ausgangstransformator wird auf eine unterschiedliche Resonanzfrequenz abgeglichen, so dass die beiden Resonanzfrequenzen gegeneinander versetzt sind. Die Addition der beiden Ausgangsspannungen ergibt einen breitbandigen Frequenzgang unter dem Materialeinfluss der Messflüssigkeit. Die Ausgangsspannung der beiden Ausgangstransformatoren wird durch den Wickelsinn um 180° gedreht und in einem Differenzverstärker addiert. Der Eingangstransformator transformiert dabei die Eingangsspannung in eine in die Flüssigkeit transformierte Spannung, die wiederum einen von der Leitfähigkeit der Messflüssigkeit abhängigen Strom zur Folge hat. Dieser Strom durch die Messflüssigkeit erzeugt in den Ausgangstransformatoren eine Sekundärspannung, die von der Leitfähigkeit der Messflüssigkeit abhängig ist.

DE 203 17 771 U1, DE 30 30 069 A1, DE 198 23 836 A1 und CH419 670 offenbaren weitere Vorrichtungen und Methoden zur elektrodenlosen Messung der Leitfähigkeit von flüssigen und festen Medien.

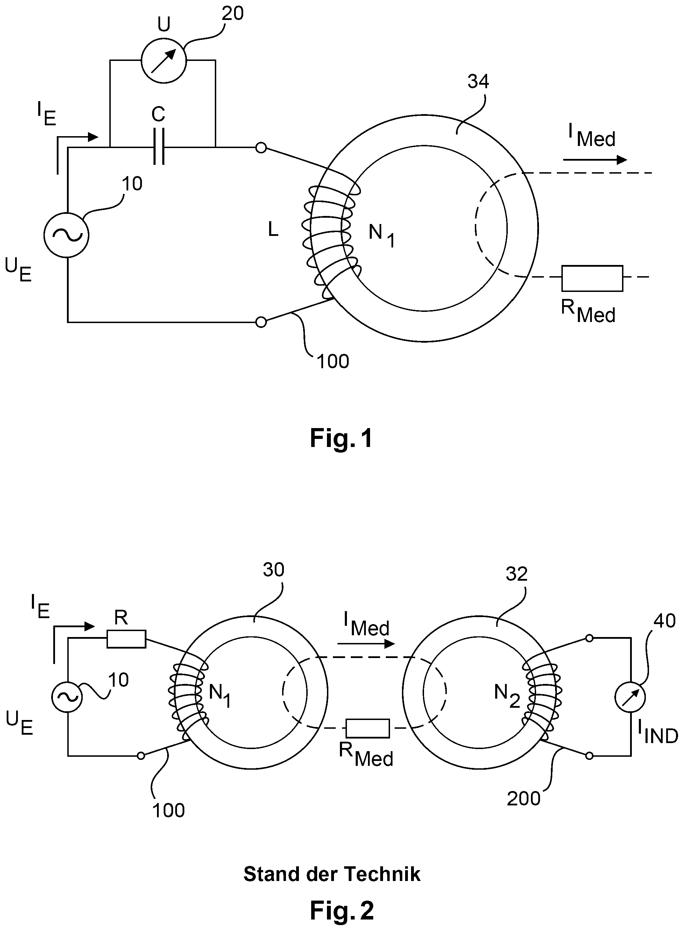

Fig. 2 zeigt ein schematisches Schaltbild eines Messwertaufnehmers nach einem elektrodenlosen induktiven Messverfahren mit zwei Transformatorspulen mit zwei getrennten Kernen 30, 32. Wird eine Erregerspannung $U_E$ mittels eines Wechselspannungsgenerators 10 am Eingang angelegt, so wird der Primärkern 30 über einen durch einen Widerstand R fließenden Erregerstrom $I_E$ magnetisiert, der durch einen Spulenleiter 100 mit $N_1$ Wicklungen fließt. Befindet sich der Messwertaufnehmer in einem gasförmigen oder flüssigen Medium, so umgibt dieses Medium beide Kerne 30, 32 und bildet somit selbst einen Stromkreis und damit eine Art von Spule, die sowohl den Primärkern 30 als auch den Sekundärkern 32 umgibt. Ist das Medium elektrisch leitend, dann entsteht aufgrund des sich ändernden magnetischen Feldes im Primärkern 30 ein sich ändernder elektrischer Ringstrom $I_{Med}$, der vom Widerstand $R_{Med}$ des Mediums abhängig ist. Dieser Ringstrom $I_{Med}$ erzeugt aufgrund seiner zeitlichen Änderung einen magnetischen Fluss im Sekundärkern 32. Dieser sich zeitlich ändernde magnetische Fluss induziert nun wiederum eine Spannung in der Sekundärspule mit $N_2$-Wicklungen, wobei die Höhe dieser Spannung von der Höhe des Ringstroms $I_{Med}$ abhängig ist und somit Aufschluss über die elektrische Leitfähigkeit des Mediums gibt. Die Sekundärspannung erzeugt bei geschlossenem Stromkreis einen Strom $I_{Ind}$ in einem Sekundärleiter 200 der Sekundärspule, der über ein Strommessgerät 40 gemessen werden kann.

Die elektrodenlose transformatorische Messung gemäß dem Stand der Technik führt jedoch zu einem relativ aufwendigen Aufbau des Messwertaufnehmers, der sich für den Einsatz bei hohen Stückzahlen, wie beispielsweise im Kraftfahrzeugsektor, schlecht eignet.

Der vorliegenden Erfindung liegt die Aufgabe zugrunde, einen Messwertaufnehmer und ein Verfahren zur elektrodenlosen Leitfähigkeitsmessung mit möglichst einfachem und kostengünstigem Aufbau bereitzustellen.

Diese Aufgabe wird gelöst durch einen Messwertaufnehmer nach Anspruch 1 und ein Verfahren nach Anspruch 13.

Dementsprechend wird vorgeschlagen, den elektrodenlosen Messwertaufnehmer durch einen einzelnen Resonanzkreis zu bilden, wobei der Spulenkern der Spule des Resonanzkreises ausgestaltet ist, um zur Messung zumindest teilweise von dem Medium umgeben zu sein, so dass die Leitfähigkeit basierend auf der durch die Leitfähigkeit des zu messenden Mediums beeinflussten Resonanzeigenschaft des Resonanzkreises bestimmbar ist.

Dabei basiert das elektrodenlose Messverfahren darauf, dass ein Wechselsignal im Resonanzfrequenzbereich des Resonanzkreises angelegt wird und die Leitfähigkeit des Mediums durch Messen des Resonanzparameters des Resonanzkreises bestimmt wird.

Somit kann der Aufbau des Messwertaufnehmers deutlich vereinfacht werden, da lediglich eine Spule mit einem Spulenkern und ein Kondensator zur Messung erforderlich sind. Das Messprinzip beruht dabei auf der Ausnutzung der Resonanzeigenschaften des aus der Spuleninduktivität und dem Kondensator bestehenden Resonanzkreis, bei dem es sich um einen Serienschwingkreis handelt. Die Spule kann dabei als primärseitige Induktivität eines Messtransformators mit dazu in Reihe geschaltetem Kondensator betrachtet werden. Bei einer solchen Betrachtung bildet das zu messende Medium dann den Sekundärkreis des Transformators, wobei die Leitfähigkeit des Mediums demnach die Resonanzeigenschaften des Messwertaufnehmers beeinflusst.

Als Anwendungsbeispiel für das zu messende Medium kann eine wässrige Harnstofflösung gewählt werden, deren Leitewert in direktem Zusammenhang mit dem Alterungszustand steht.

Gemäß einer vorteilhaften Weiterbildung kann der Spulenkern ringförmig und zur Messung vollständig vom Medium umschlossen sein, so dass das Medium den Sekundärkreis eines Transformators und der Spulenkern den Kern des Transformators bildet.

Bei dem zu bestimmenden Resonanzparameter kann es sich um die Güte oder die damit unmittelbar verknüpfte Bandbreite des Resonanzkreises handeln.

Gemäß einer vorteilhaften Implementierung des Messwertaufnehmers kann der Spulenkern durch eine zylindrische ferromagnetische Hülse gebildet sein, wobei die Wicklungen der Spule beispielsweise durch einen Litzendraht gebildet sein können.

Als Ausgangsgröße des Messwertaufnehmers dient die Spannung über einem Kondensator des Schwingkreises. Eine Messvorrichtung zur elektrodenlosen Messung der Leitfähigkeit des Mediums kann neben dem vorgenannten Messwertaufnehmer eine Ansteuerschaltung zum Anlegen eines Wechselsignals mit Resonanzfrequenz an den Resonanzkreis aufweisen, und eine Auswertungsschaltung zur Gleichrichtung einer Blindspannung an dem Resonanzkreis. Diese Blindspannung kann dann zur Ermittlung des Resonanzparameters herangezogen werden.

Ferner kann die Messvorrichtung vorzugsweise einen Controller zur Erzeugung des Wechselsignals und zur Erfassung der gleichgerichteten Blindspannung aufweisen, wobei der Controller ausgestaltet sein kann, den Resonanzparameter basierend auf der erfassten Blindspannung zu ermitteln.

Die Bestimmung der Leitfähigkeit des Mediums kann dabei durch relative Messung in Bezug auf ein Vergleichsmedium erfolgen, wobei als Vergleichsmedium beispielsweise Luft verwendet werden kann.

Alternativ ist auch eine absolute Messung nach Eichung des Messwertaufnehmers bzw. der Messvorrichtung möglich, unter Zuhilfenahme von Kennfeldern, die vorab programmierbar sind und dem Controller zur Verfügung stehen.

Vorteilhafte Weiterbildungen der vorliegenden Erfindung sind in den beigefügten Unteransprüchen angegeben.

Die Erfindung wird im Folgenden anhand von Ausführungsbeispielen unter Bezugnahme auf die Zeichnungsfiguren näher erläutert. Es zeigen:

Fig. 1      ein schematisches Schaltbild eines Messwertaufnehmers gemäß einem ersten Ausführungsbeispiel;

Fig. 2      ein schematisches Schaltbild eines aus dem Stand der Technik bekannten Messwertaufnehmers;

Fig. 3      ein Ersatzschaltbild eines Resonanzkreises;

Fig. 4      ein vereinfachtes Ersatzschaltbild einer Spule in einer elektrisch leitenden Flüssigkeit;

Fig. 5      eine schematische Ansicht einer beispielhaften Implementierung eines Messaufnehmers gemäß einem zweiten Ausführungsbeispiel; und

Fig. 6      ein schematisches Schaltbild einer Messvorrichtung gemäß einem dritten Ausführungsbeispiel.

Es folgt eine Beschreibung von Ausführungsbeispielen der vorliegenden Erfindung am Beispiel eines Messwertaufnehmers zur elektrodenlosen Messung der Leitfähigkeit einer wässrigen Harnstofflösung zur Verwendung bei der Abgasreinigung in einem Kraftfahrzeug.

Verbrennungsmotoren erzeugen eine Vielzahl verschiedener Schadstoffe, welche mit den Abgasen bei der Treibstoffverbrennung zwangsläufig entstehen. Zu diesen Schadstoffen zählen unter anderem verschiedene Stickoxide, die durch Abgasnachbehandlung mit wässriger Harnstofflösung durch selektive katalytische Reduktion mit Ammoniak als Reduktionsmittel reduziert werden sollen. In dem Harnstofftank können Messwertaufnehmer (auch Sensoren genannt) für verschiedene Zwecke zum Einsatz kommen. Beispielsweise kann der Füllstand des Harnstofftanks, die Harnstoffkonzentration oder die Art der Flüssigkeit im Harnstofftank bestimmt werden. So unterliegt beispielsweise die wässrige Harnstofflösung auch bei geringen Temperaturen einem kontinuierlichen Alterungsprozess durch chemische Reaktionen und durch Verdunstungsvorgänge. Dies hat zur Folge, dass sich die Harnstoffkonzentration mit der Zeit verringert, wobei durch Untersuchungen nachgewiesen werden konnte, dass die Höhe der Leitfähigkeit der wässrigen Harnstofflösung linear zum Ammoniakgehalt verläuft. Durch eine Leitfähigkeitsmessung kann somit der Ammoniakgehalt und damit der Alterungszustand der wässrigen Harnstofflösung mittels einer Leitfähigkeitsmessung festgestellt werden. Ferner lässt sich durch die Leitfähigkeitsmessung auch der Füllstand messen oder feststellen, ob es sich bei dem Medium möglicherweise um eine falsche Flüssigkeit handelt.

Gemäß den nachfolgenden Ausführungsbeispielen wird ein einfacher und kostengünstiger Messwertaufnehmer zur Leitwertmessung bereitgestellt, wobei auf die gesamte Sekundärseite der herkömmlichen transformatorischen Messwertaufnehmer verzichtet wird. Dadurch entfällt die Sekundärspule samt Sekundärkern. Es verbleibt eine einfache Messwertaufnehmerschaltung, welche sich auf einen einzelnen Kern mit Wicklung beschränkt.

Fig. 1 zeigt einen solchen vereinfachten Messwertaufnehmer gemäß einem ersten Ausführungsbeispiel.

Der vorgeschlagene Messwertaufnehmer gemäß dem ersten Ausführungsbeispiel besteht aus einem Resonanzkreis (auch Schwingkreis genannt) mit Kondensator C und Spule L mit $N_1$-Wicklungen eines Spulendrahts 100 und ringförmigem Spulenkern 34. Wird dieser ringförmige Spulenkern 34 in die wässrige Harnstofflösung oder ein anderes zu messendes Medium eingetaucht oder von diesem umschlossen, so induziert der durch die Spule L in dem Spulenkern 34 erzeugte magnetische Fluss $\Phi$ ein elektrisches Feld in dem zu messenden Medium, das wiederum einen Sekundärstrom $I_{Med}$ in dem zu messenden Medium hervorruft, der von der Leitfähigkeit und damit dem Widerstand $R_{Med}$ des zu messenden Mediums abhängig ist. Die Messung der Leitfähigkeit des zu messenden Mediums (d.h. der wässrigen Harnstofflösung) erfolgt dabei basierend auf der Blindspannung über dem Kondensator C. Hierfür ist in Fig. 1 ein schematischer Spannungsmesser 20 dargestellt.

In leitfähigen Medien entsteht somit ein Transformator, dessen Ersatzschaltbild eine Parallelschaltung aus Eisenverlustwiderstand und Hauptinduktivität der Spule L aufweist. Durch die Ausbildung einer "Sekundärspule" beim Eintauchen der Spule L in das zu messende leitfähige Medium ändert sich die Größe des Widerstands des Resonanzkreises. Dies liegt daran, dass die durch das leitfähige Messmedium generierte virtuelle Sekundärspule als zusätzliche Parallelschaltung interpretiert werden kann. Diese Widerstandsänderung führt wiederum zu einer Änderung des Resonanzverhaltens des Resonanzkreises. Dieses Resonanzverhalten kann beispielsweise durch die sogenannte Güte Q oder die damit verknüpfte Bandbreite B des Resonanzkreises spezifiziert werden. So gibt beispielsweise die Größe der Güte Q eine Auskunft über die Schwingfähigkeit des Resonanzkreises und die Leitfähigkeit des zu untersuchenden Mediums.

Die Messung der Leitfähigkeit kann dabei durch Bestimmung des Wirk- und Blindanteils der Spule zunächst in einem nicht-leitfähigen Medium (wie beispielsweise Luft) und anschließend in einem leitfähigen Medium vollzogen werden. Mit Hilfe der durch die Impedanzmessung des Wirkwiderstands R und Blindwiderstands X gelieferten Ergebnissen kann anschließend die Güte Q rechnerisch über den nachfolgenden formelmäßigen Zusammenhang berechnet werden:

$$Q = \text{Blindanteil/Wirkanteil}$$

wobei bei einem Serienresonanzkreis die Blindspannung bzw. der Blindwiderstand als Blindanteil betrachtet werden, und bei einer Parallelschaltung der Blindstrom bzw. der Blindleitwert als Blindanteil betrachtet werden.

Für die Bandbreite B gilt dann:

$$B = f_0/Q,$$

wobei $f_0$ die Resonanzfrequenz des Resonanzkreises kennzeichnet.

Bei einer relativen Messung werden somit zwei verschiedene Werte für die Güte Q bzw. die Bandbreite B bei den unterschiedlichen Medien ermittelt, wobei die Differenz der ermittelten Güte- bzw. Bandbreitenwerte möglichst hoch sein sollte.

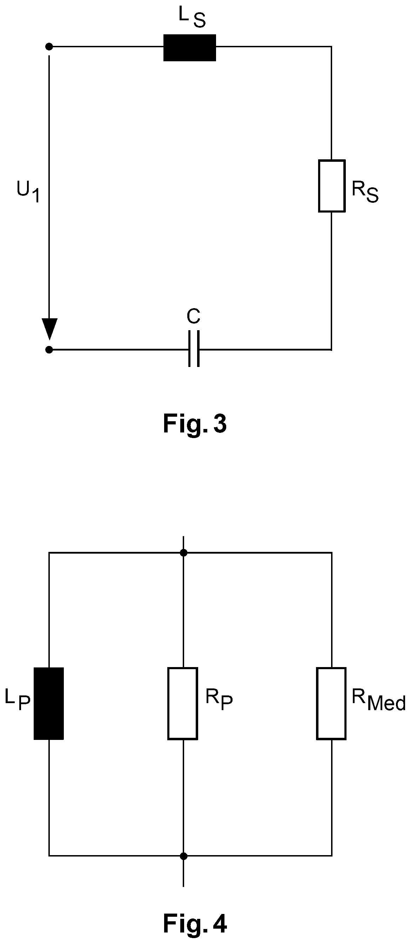

Fig. 3 zeigt ein schematisches Ersatzschaltbild eines RLC-Reihenschwingkreises mit einer Induktivität $L_S$, einem Widerstand $R_S$ und einem Kondensator C, wobei die Güte und damit die Schwingfähigkeit des Resonanzkreises durch die Leitfähigkeit des die Spule $L_S$ umgebenden Mediums beeinflusst wird. Ausschlaggebend für die Änderung der Güte ist die Wirkwiderstandsänderung. Durch die Serienschaltung des Kondensators C kann die Änderung des Wirkwiderstands erfasst werden. Beim Anlegen einer Erregerwechselspannung $U_1$ beginnt der Resonanzkreis mit der Erregerfrequenz zu schwingen, welche von einer Spannungsquelle vorgegeben wird. Der Kondensator C wird somit mit dieser Frequenz abwechselnd auf- und entladen. Dabei fällt an der Spule $L_S$ und am Kondensator C eine Blindspannung und am Widerstand $R_S$ eine Wirkspannung ab.

Bei einer vorbestimmten Frequenz heben sich die Blindanteile gegenseitig auf. Diese Frequenz wird Resonanzfrequenz genannt. In diesem Fall verschwindet somit der Blindanteil und es bleibt ausschließlich der Wirkanteil des Wirkwiderstands $R_S$ übrig. Die sich aufhebenden Blindanteile führen zu einer Überhöhung der Blindspannungen, so dass sich die Anregung des Resonanzkreises mit seiner Resonanzfrequenz oder Eigenfrequenz durch eine Spannungsüberhöhung am Kondensator C als Funktion der Erregerfrequenz nachweisen lässt.

Wird die Schaltung bzw. der Kern der Induktivität $L_S$ bei der Resonanzfrequenz in ein leitfähiges Medium eingetaucht oder von einem solchen zumindest teilweise umschlossen, so ändert sich in erster Linie der Wirkwiderstand aufgrund der sekundärseitigen Belastung. Ursache dafür ist, dass sich nun zusätzliche Elemente parallel zum Resonanzkreis befinden. Der Wirkwiderstand dämpft, abhängig von seiner Größe, die Überhöhung der Blindspannung über dem Kondensator C. Mit sich änderndem Wirkwiderstand ändert sich somit ebenfalls die Höhe der Blindspannung am Kondensator C. Diese Spannungsänderung kann auf einfache Weise gemessen und als Kenngröße zur Leitwertbestimmung des zu messenden Mediums herangezogen werden.

Da sich bei der Resonanzfrequenz die Blindanteile des Resonanzkreises gegenseitig aufheben, besteht ein direkter Zusammenhang zwischen der Spannungsüberhöhung am Kondensator C und der Güte Q bzw. der Bandbreite B.

Am Messwertaufnehmer kann eine Kalibrierung durchgeführt werden. D.h., es wird eine Spannungsmessung in einem nicht-leitfähigen Medium und in einem leitfähigen Medium mit bekanntem Alterungszustand durchgeführt. Zwischen diesen Messpunkten besteht ein lineares Verhalten zwischen der Leitfähigkeit des Mediums und der gemessenen Spannung. Es können somit Relativwerte bestimmt werden, so dass durch die Erfassung einer Spannungsänderung die Leitfähigkeit der vorliegenden Substanz ermittelt werden kann.

In einer beispielhaften Ausführungsform wird ein zylindrischer Spulenkern mit 15 Wicklungen umwickelt, so dass sich eine Induktivität L = 4,39 mH und eine Resonanzfrequenz von ungefähr 10 kHz ergibt. Der Blindwiderstand der Spule beträgt somit bei Resonanzfrequenz $X_S = 2\pi f L = 254,04\ \Omega$. Damit der RLC-Resonanzkreis mit der verwendeten Spule und der gewählten Messfrequenz bei Resonanz betrieben werden kann, muss der passende Kondensator C anhand der nachfolgenden Gleichung berechnet werden:

$$C = 1/((2\pi f)^2 \cdot L) = 57,7\ \text{nF}.$$

Untersuchungen haben gezeigt, dass die Resonanzfrequenz die Güte Q und damit auch die Bandbreite B sowohl im nicht-leitfähigen Medium als auch im leitfähigen Medium beeinflussen kann. Dabei steigt die Gütedifferenz zunächst an, erreicht ein Maximum und nimmt anschließend wieder ab. Für eine Salzlösung ähnlich der wässrigen Harnstofflösung ergeben sich gute Werte der Gütedifferenz bei einer Resonanzfrequenz von ca. 84 kHz.

Als Material für den Spulenkern kann ein MnZn-Ferrit gewählt werden. Dieses Kernmaterial besitzt eine besonders hohe relative Permeabilität $\mu_r$ und führt damit zu einer großen Induktivität $L_S$. Da die Eisenverluste des Kernmaterials eine negative Auswirkung auf die Güte Q besitzen, sollte ein Kernmaterial mit geringen Eisenverlusten verwendet werden.

Fig. 4 zeigt ein vereinfachtes Ersatzschaltbild einer Spule in einem elektrisch leitenden Medium. Wie aus Fig. 4 entnehmbar ist, ergibt sich als vereinfachtes Ersatzschaltbild eine Parallelschaltung einer Induktivität $L_P$ eines den Eisenverlusten entsprechenden Widerstands $R_P$ und eines von der Leitfähigkeit des zu messenden Mediums abhängigen Widerstands $R_{Med}$. Aus diesem Ersatzschaltbild ergibt sich, dass der Einfluss des durch die Leitfähigkeit des zu messenden Mediums bestimmten parallel geschalteten Widerstands $R_{Med}$ auf die Güte Q bzw. die Bandbreite B des Resonanzkreises um so größer ist, je höher der den Eisenverlusten entsprechende Widerstand $R_P$ ist. Der Wirkwiderstand des Resonanzkreises ändert sich damit in Abhängigkeit der Leitfähigkeit des Messmediums umso stärker, je höher der den Eisenverlusten entsprechende Parallelwiderstand $R_P$ ist; d.h. also, je geringer die Eisenverluste sind.

Bei einer Parallelschaltung sollte somit das Verhältnis $R_P/L$ möglichst groß sein und bei einer Serienschaltung das Verhältnis $L/R_S$.

Der Übergang der Parallelschaltung der Elemente $R_P$ und $L_P$ in eine Serienschaltung mit Elementen $R_S$ und $L_S$ kann für hohe Gütewerte gemäß folgender Formel errechnet werden:

$$L_S = L_P$$

$$R_S = (2\pi f_0 L_S)^2 / R_P.$$

Somit kann durch Wandlung in eine Serienschaltung eine einfache Messwertauswertung realisiert werden, da eine einfache Spannungsmessung genügt, um die Güte Q zu bewerten.

Die Eigenschaften des Kernmaterials haben somit einen großen Einfluss auf die Güte Q und damit auf die Bandbreite B.

Auch die Anzahl der Wicklungen der Spule des Resonanzkreises können einen starken Einfluss auf die gemessene Gütedifferenz haben, sofern die Dicke des Wicklungsdrahts erheblich ist. Die durch die Wicklungen bedeckte Kernfläche des zylindrischen Kerns nimmt nämlich mit steigender Wicklungszahl zu. Damit nimmt die Fläche der kreisförmigen Spulenöffnung mit zunehmender Zahl der Wicklungen ab, wodurch eine magnetische Abschirmung der Spule entsteht. Es sollte daher ein Wicklungsdraht mit möglichst geringem Durchmesser verwendet werden.

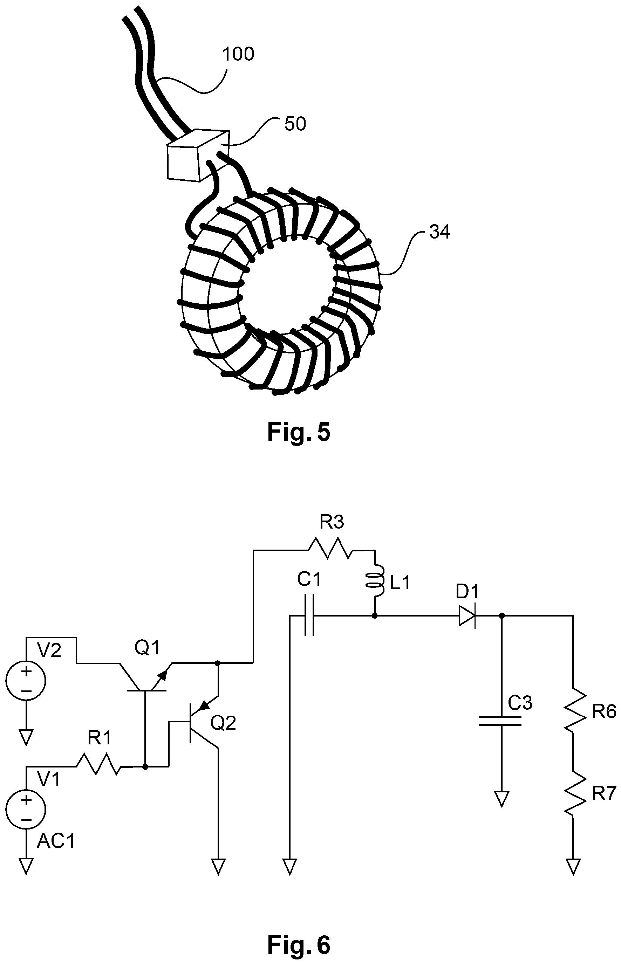

Fig. 5 zeigt eine schematische Darstellung einer beispielhaften Implementierung eines Messwertaufnehmers gemäß einem zweiten Ausführungsbeispiel, wobei ein zylindrischer Kern 34 mit einem dünnen Litzendraht 100 und 25 Windungen umwickelt ist. In Fig. 5 ist auch ein seriell geschalteter Kondensator 50 mit Gehäuse schematisch erkennbar.

Die Implementierung gemäß Fig. 5 führt beispielsweise zu einem Wirkwiderstand von 10,94 Ω in Luft und einem Wirkwiderstand von 17,75 Ω in Salzlösung, wobei der Blindanteil des Kondensators bei einer Resonanzfrequenz von 10,2 kHz 233,94 Ω beträgt. Daraus ergibt sich bemäß vorgenannter Gleichung eine Güte Q von 21,34 in Luft und 13,15 in Salzlösung und damit eine gute Unterscheidungsmöglichkeit.

Fig. 6 zeigt ein schematisches Schaltbild einer Messschaltung gemäß einem dritten Ausführungsbeispiel zur elektrodenlosen Messung der Leitfähigkeit eines Mediums.

Der aus einem Widerstand R3, einer Spule L1 und einem Kondensator C1 bestehende Resonanzkreis des Messwertaufnehmers wird gemäß Fig. 6 mit einer Ansteuerschaltung angesteuert. Zur Ansteuerung kann eine pulsförmige Spannung (AC1) verwendet werden, die in einem Generator V1 erzeugt wird. Dies kann durch einen Controller (nicht gezeigt) gesteuert werden, wobei die pulsförmige Spannung mit der Resonanzfrequenz des Resonanzkreises beispielsweise zwischen 0V und 5V getaktet werden kann.

Eine weitere Spannungsquelle V2 erzeugt eine kontinuierliche Gleichspannung in Höhe von beispielsweise 5V. Liegt nun an der Basis eines ersten Transistors Q1 eine Spannung an, so schaltet dieser durch und es fließt ein Strom aus der Spannungsquelle V2 über den Transistor Q1 in den Resonanzkreis. Geht die Spannung an der Basis des ersten Transistors Q1 zurück, so sperrt dieser Transistor. Aufgrund der gepulsten Spannung der Spannungsquelle V1 ergibt sich nun am Emitter des ersten Transistors Q1 eine Spannung, die mit der von der ersten Spannungsquelle V1 vorgegebenen Frequenz zwischen 0V und 5V getaktet ist. Während der erste Transistor Q1 durchgeschaltet ist und somit ein Strom in den Resonanzkreis fließt, liegt an der Basis des zweiten Transistors Q2 ein Potential von 5 V an, so dass der zweite Transistor Q2 sperrt. Sperrt dagegen der erste Transistor Q1, so kann der Strom aus dem Resonanzkreis durch den zweiten Transistor Q2 gegen Masse abfließen.

Der Controller kann beispielsweise mittels einer geeigneten Software so gesteuert werden, dass er die Frequenz so lange ändert, bis der Resonanzfall des Resonanzkreises eintritt.

Um die Spannung am Kondensator C1 des Resonanzkreises messen zu können, weist die Messschaltung gemäß Fig. 6 eine Auswertungsschaltung auf, die die Wechselspannung über dem Kondensator C1 über eine Diode D1 und einen Kondensator C3 gleich richtet. Die gleichgerichtete Spannung über dem Kondensator C3 kann dann dem Controller über einen Analog-Digital-Wandler als Messsignal zugeführt werden. Um das Messsignal in seiner Höhe an den Eingangswertebereich des Controllers anzupassen, kann die Auswertungsschaltung ein optionales Potentiometer aufweisen, das in Fig. 6 durch die Widerstände R6 und R7 angedeutet ist.

Wird das gepulste Spannungssignal beispielsweise mittels des Controllers mit der Resonanzfrequenz des Resonanzkreises getaktet, so befindet sich der Resonanzkreis in Resonanz. Es entsteht somit eine Spannungsüberhöhung über dem Kondensator C1 des Resonanzkreises. Die Wechselspannung an dem Kondensator C1 wird mit Hilfe des Kondensators C3 und der Diode D1 gleichgerichtet und über dem Kondensator C3 gemessen. Ändert sich die Leitfähigkeit des den Messwertaufnehmer bzw. die Spule L1 umgebenden Mediums, so ändert sich die Höhe des Wirkwiderstands R3 des Resonanzkreises. Diese Änderung führt wiederum zu einer Dämpfung des Resonanzkreises und damit zu einer Spannungsänderung über dem Kondensator C1 und damit über dem Kondensator C3.

Die Erfindung ist selbstverständlich nicht auf die konkrete Schaltungsausführung gemäß dem dritten Ausführungsbeispiel und die Ausführungen des Messwertaufnehmers gemäß dem ersten und zweiten Ausführungsbeispiel beschränkt. Der Spulenkörper kann auch andere Formen aufweisen, solange das umgebende Medium einen Einfluss auf den Wirkwiderstand des Resonanzkreises hat. Grundsätzlich kann der Spulenkern auch eine nicht-geschlossene Form mit Unterbrechung aufweisen. Die Messschaltung kann auch durch eine sinusförmige oder andere Wechselspannung im Bereich der Resonanzfrequenz des Resonanzkreises angesteuert werden. Auch kann die Spannung über dem Kondensator C1 des Resonanzkreises durch ein Wechselspannungsmessgerät direkt erfasst werden.

Der Resonanzkreis des Messwertaufnehmers kann auch mehrere Spulen bzw. Kondensatoren aufweisen, um dadurch beispielsweise eine Anpassung an die Messumgebung oder sonstige Gegebenheiten zu erreichen.

Grundsätzlich kann der vorgeschlagene Messwertaufnehmer zur Messung der Leitfähigkeit eines jeden Mediums verwendet werden. Auch die Leitfähigkeit eines festen Mediums kann durch entsprechende Annäherung an den Spulenkern oder Aufnahme des Spulenkerns in eine entsprechende Aussparung erreicht werden.

**Patentansprüche**

1. Messwertaufnehmer zur elektrodenlosen Messung der Leitfähigkeit eines Mediums mit einem Resonanzkreis, wobei eine Spule des Resonanzkreises einen Spulenkern (34) aufweist, der so ausgestaltet ist, dass er bei der Messung zumindest teilweise von dem zu messenden Medium umgeben ist, wobei der Resonanzkreis ein Reihenschwingkreis bestehend aus der Spule und einem Kondensator ist, und wobei Mittel vorhanden sind, die Spannung über dem Kondensator, die als Ausgangsgröße des Messwertaufnehmers dient, zu messen.

2. Messwertaufnehmer nach Anspruch 1, wobei der Spulenkern (34) ringförmig ist und so ausgestaltet ist, dass er bei der Messung vollständig vom Medium umschlossen ist, so dass das Medium einen Sekundärkreis eines Transformators und der Spulenkern (34) einen Kern des Transformators bildet.

3. Messwertaufnehmer nach Anspruch 1 oder 2, wobei der Spulenkern so ausgestaltet ist, dass er zur Messung in eine leitende Flüssigkeit getaucht ist.

4. Messwertaufnehmer nach Anspruch 3, wobei die leitende Flüssigkeit eine wässrige Harnstofflösung zur Abgasreinigung eines Kraftfahrzeugs ist.

5. Messwertaufnehmer nach einem der vorhergehenden Ansprüche, wobei der Resonanzparameter die Güte oder Bandbreite des Resonanzkreises ist.

6. Messwertaufnehmer nach einem der vorhergehenden Ansprüche, wobei der Spulenkern (34) durch eine zylindrische ferromagnetische Hülse gebildet ist.

7. Messwertaufnehmer nach einem der vorhergehenden Ansprüche, wobei Wicklungen der Spule durch einen Litzendraht gebildet sind.

8. Messvorrichtung zur elektrodenlosen Messung der Leitfähigkeit eines Mediums mit einem Messwertaufnehmer gemäß Anspruch 1, einer Ansteuerschaltung, die ausgestaltet ist zum Anlegen eines Wechselsignals mit Resonanzfrequenz an den Resonanzkreis, und einer Auswertungsschaltung zur Gleichrichtung einer Blindspannung an dem Resonanzkreis.

9. Messvorrichtung nach Anspruch 8, wobei die Auswertungsschaltung ausgestaltet ist, die Blindspannung über einem Kondensator des Resonanzkreises zu messen.

10. Messvorrichtung nach Anspruch 8 oder 9, desweiteren umfassend einen Controller zur Erzeugung des Wechselsignals und zur Erfassung der gleichgerichteten Blindspannung, wobei der Controller ausgestaltet ist, den Resonanzparameter basierend auf der erfassten Blindspannung zu ermitteln.

11. Verfahren zur elektrodenlosen Messung der Leitfähigkeit eines Mediums, mit den Schritten:

- Anordnen eines Spulenkerns (34) einer Spule eines Reihenschwingkreises in dem Medium, so dass er zumindest teilweise von dem Medium umgeben ist wobei der Reihenschwingkreis aus der Spule und einem Kondensator besteht;
- Anlegen eines Wechselsignals im Resonanzfrequenzbereich des Reihenschwingkreises an den Reihenschwingkreis; und
- Bestimmen der Leitfähigkeit des Mediums anhand einer Messung der Spannung über dem Kondensator des Reihenschwingkreises zur Ermittlung eines Resonanzparameters des Resonanzschwingkreises.

12. Verfahren nach Anspruch 11, wobei die Bestimmung der Leitfähigkeit durch relative Messung in Bezug auf ein Vergleichsmedium erfolgt.

13. Verfahren nach Anspruch 12, wobei als Vergleichsmedium Luft verwendet wird.

**Claims**

1. Sensor for electrodeless measurement of the conductivity of a medium, comprising a resonant circuit, wherein a coil of the resonant circuit comprises a coil core (34) which is designed so as to be surrounded at least in part, during the measurement process, by the medium to be measured, wherein the resonant circuit is a series-resonant circuit consisting of the coil and a capacitor, and wherein means are present which measure the voltage across the capacitor, which voltage is used as an output variable of the sensor.

2. Sensor according to clam 1, wherein the coil core (34) is annular and is designed so as to be completely surrounded by the medium during the measurement process, such that the medium forms a secondary circuit of a transformer, and the coil core (34) forms a core of the transformer.

3. Sensor according to either claim 1 or claim 2, wherein the coil core is designed so as to be submerged in a conductive fluid in order to carry out the measurement.

4. Sensor according to claim 3, wherein the conductive fluid is an aqueous urea solution for exhaust gas purification for a motor vehicle.

5. Sensor according to any one of the preceding claims, wherein the resonance parameter is the quality factor or bandwidth of the resonant circuit.

6. Sensor according to any one of the preceding claims, wherein the coil core (34) is formed by a cylindrical ferromagnetic sleeve.

7. Sensor according to any one of the preceding claims, wherein windings of the coil are formed by a stranded wire.

8. Measuring device for electrodeless measurement of the conductivity of a medium, comprising a sensor according to claim 1, a control circuit which is designed to apply an alternating signal, having a resonant frequency, to the resonant circuit, and an evaluation circuit for rectifying a reactive voltage to the resonant circuit.

9. Measuring device according to claim 8, wherein the evaluation circuit is designed to measure the reactive voltage across a capacitor of the resonant circuit.

10. Measuring device according to either claim 8 or claim 9, further comprising a controller for generating the alternating signal and for detecting the rectified reactive voltage, wherein the controller is designed to determine the resonance parameter on the basis of the detected reactive voltage.

11. Method for electrodeless measurement of the conductivity of a medium, comprising the steps of:

- arranging a coil core (34) of a coil of a series-resonant circuit in the medium, such that said coil core is surrounded by the medium at least in part, wherein the series-resonant circuit consists of the coil and a capacitor;
- applying an alternating signal to the series-resonant circuit, which signal in the resonant frequency range of the series-resonant circuit; and
- establishing the conductivity of the medium using a measurement of the voltage across the capacitor of the series-resonant circuit, in order to determine a resonance parameter of the resonant circuit.

12. Method according to claim 11, wherein the conductivity is established by means of a relative measurement with respect to a reference medium.

13. Method according to claim 12, wherein air is used as the reference medium.

**Revendications**

1. Capteur de valeur de mesure pour la mesure sans électrode de la conductivité d'un milieu comprenant un circuit résonant, une bobine du circuit résonant comprenant un noyau de bobine (34), qui est conçu de manière à être entouré au moins en partie par le milieu à mesurer lors de la mesure, le circuit résonant étant un circuit résonant série constitué de la bobine et d'un condensateur, et des moyens étant présents pour mesurer la tension sur le condensateur, laquelle sert de variable de sortie du capteur de valeur de mesure.

2. Capteur de valeur de mesure selon la revendication 1, le noyau de bobine (34) étant annulaire et étant conçu de manière à être entouré entièrement par le milieu lors de la mesure, de sorte que le milieu forme un circuit secondaire d'un transformateur et que le noyau de bobine (34) forme un noyau du transformateur.

3. Capteur de valeur de mesure selon la revendication 1 ou 2, le noyau de bobine étant conçu de manière à être plongé dans un liquide conducteur aux fins de mesure.

4. Capteur de valeur de mesure selon la revendication 3, le liquide conducteur étant une solution d'urée aqueuse destinée à l'épuration des gaz d'échappement d'un véhicule automobile.

5. Capteur de valeur de mesure selon l'une quelconque des revendications précédentes, le paramètre de résonance étant la qualité ou la largeur de bande du circuit résonant.

6. Capteur de valeur de mesure selon l'une quelconque des revendications précédentes, le noyau de bobine (34) étant formé par une douille ferromagnétique cylindrique.

7. Capteur de valeur de mesure selon l'une quelconque des revendications précédentes, les enroulements de la bobine étant formés par un fil torsadé.

8. Dispositif de mesure pour la mesure sans électrode de la conductivité d'un milieu, comprenant un capteur de valeur de mesure selon la revendication 1, un circuit de commande, qui est conçu pour appliquer un signal alternatif à la fréquence de résonance sur le circuit résonant, et un circuit d'évaluation pour le redressement d'une tension réactive sur le circuit résonant.

9. Dispositif de mesure selon la revendication 8, le circuit d'évaluation étant conçu pour mesurer la tension réactive sur un condensateur du circuit résonant.

10. Dispositif de mesure selon la revendication 8 ou 9, comprenant en outre un dispositif de commande pour la génération du signal alternatif et pour la détection de la tension réactive redressée, le dispositif de commande étant conçu pour déterminer le paramètre de résonance sur la base de la tension réactive détectée.

11. Procédé de mesure sans électrode de la conductivité d'un milieu, comprenant les étapes :

- d'agencement d'un noyau de bobine (34) d'une bobine d'un circuit résonant série dans le milieu, de manière à ce qu'il soit entouré au moins en partie par le milieu, le circuit résonant série étant constitué de la bobine et d'un condensateur ;

- d'application d'un signal alternatif dans la plage de la fréquence de résonance du circuit résonant série sur le circuit résonant série ; et

- de détermination de la conductivité du milieu sur la base d'une mesure de la tension sur le condensateur du circuit résonant série pour la détermination d'un paramètre de résonance du circuit résonant série.

12. Procédé selon la revendication 11, la détermination de la conductivité étant réalisée par une mesure relative par rapport à un milieu témoin.

13. Procédé selon la revendication 12, l'air étant utilisé comme milieu témoin.

**Fig. 1**

**Stand der Technik**

**Fig. 2**

**Fig. 3**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19611174 C1
- DE 20317771 U1
- DE 3030069 A1
- DE 19823836 A1
- CH 419670